# EUROPEAN PATENT APPLICATION

(11) **EP 4 768 740 A1**
(43) Date of publication of application: **01.07.2026**
(21) Application number: 25790054.8
(22) Date of filing: 18.04.2025
(51) Int. Cl.: F16B 35/04

(54) **THREADED CONNECTING MEMBER AND BATTERY PACK**

(30) Priority: 18.04.2024 CN 202420818465 U
(71) Applicant: Eve Energy Co., Ltd, Huizhou, Guangdong 516006 (CN)
(72) Inventor: ZHANG, Weijin, Huizhou, Guangdong 516006 (CN)
(74) Representative: Berggren Oy
(86) International application number: PCT/CN2025/089913
(87) International publication number: WO 2025/218794

(57) **Abstract**

A threaded fastener and a battery pack are provided. The threaded fastener includes a threaded rod and a flange plate. The threaded rod is configured to be screwed into a part to-be-connected. The flange plate includes a pressing surface. One end of the threaded rod is connected to the pressing surface. The pressing surface is configured to be pressed against the part to-be-connected. A circumferential edge of the pressing surface is formed with an anti-scratch arcuate surface. The anti-scratch arcuate surface is tangential to the pressing surface. The threaded fastener of the subject application solves the technical problem of burrs and debris formation caused by the threaded fastener scratching the part to-be-connected.

## Description

This application claims priority to Chinese Patent Application No. 202420818465.7 filed on April 18, 2024, with the Chinese Patent Office, the content of which is incorporated herein by reference in its entirety.

### TECHNICAL FIELD

This application relates to the field of battery technologies, and in particular to a threaded fastener and a battery pack.

### BACKGROUND

In related technologies, it is a commonly used fixed connection method in production that a threaded fastener is used to connect two parts to-be-connected together. Specifically, a threaded fastener includes a threaded rod and a flange plate. The flange plate is connected to one end of the threaded rod. In operation, the threaded rod is passed through a predetermined connection hole in the two parts to-be-connected, and the threaded rod is at least threaded with one of the parts to-be-connected away from the flange plate. One part to-be-connected is pressed by the flange plate against another part to-be-connected, thereby achieving a fixed connection between the two parts to-be-connected.

### SUMMARY

However, in certain applications, a circumferential edge of the flange plate of the threaded fastener is formed with a sharp right-angled edge, and the threaded fastener exhibits a greater hardness than the parts to-be-connected. During a tightening process of the threaded fastener, the sharp right-angled edge tends to scratch the parts to-be-connected with a relatively lower harness, leading to burrs and debris formation.

A threaded fastener is provided in the present application. The threaded fastener includes a threaded rod and a flange plate. The threaded rod is configured to be screwed into a part to-be-connected. The flange plate includes a pressing surface. One end of the threaded rod is connected to the pressing surface. The pressing surface is configured to be pressed against the part to-be-connected. A circumferential edge of the pressing surface is formed with an anti-scratch arcuate surface. The anti-scratch arcuate surface is tangential to the pressing surface.

A battery pack is also provided in the present application. The battery pack includes the aforementioned threaded fastener.

### Beneficial Effects

The threaded fastener according to this application is formed with an anti-scratch arcuate surface at a circumferential edge of a pressing surface of a flange plate, and the anti-scratch arcuate surface is tangential to the pressing surface. During a tightening process of the threaded fastener, the anti-scratch arcuate surface can avoid the circumferential edge of the flange plate from scratching the part to-be-connected, thereby avoiding burrs and debris formation, which effectively addresses the technical problem of burrs and debris formation caused by the threaded fastener scratching the part to-be-connected.

The battery pack according to this application adopts the above-mentioned threaded fastener, addressing the technical problem of burrs and debris formation caused by the threaded fastener scratching the part to-be-connected and ensuring the cleanliness inside the battery pack.

### BRIEF DESCRIPTION OF THE DRAWINGS

Figure 1 is a three-dimensional schematic diagram of a threaded fastener according to an embodiment of the present application;
Figure 2 is a three-dimensional schematic diagram of a threaded fastener according to another embodiment of the present application;
Figure 3 is a schematic diagram of a structure of a threaded fastener according to yet another embodiment of the present application;
Figure 4 is a schematic diagram of a partial structure of the threaded fastener in Figure 3; and
Figure 5 is a sectional view of a structure of a battery pack according to the embodiment of the present application.

### DETAILED DESCRIPTION OF THE PREFERRED EMBODIMENTS

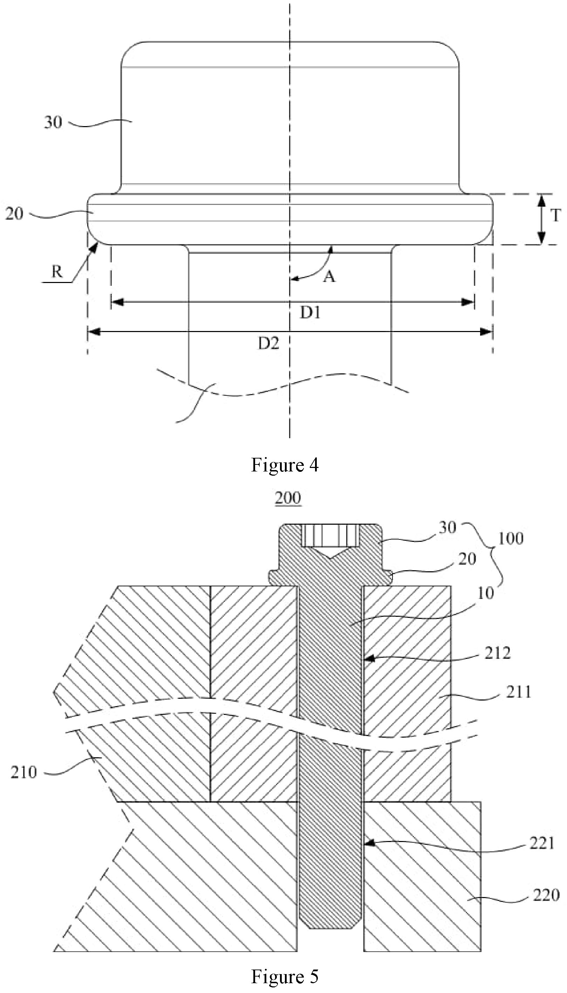

Firstly, in related technologies, it is a commonly used fixed connection method in production that a threaded fastener is used to connect two parts to-be-connected together. Specifically, as shown in Figure 5, taking the assembly of battery pack 200 as an example, in order to secure battery modules 210 in a housing 220, the aluminium end plates 211 are usually arranged at both ends of the battery module 210. Connecting through-holes 212 are passed through the aluminium end plates 211. After the battery modules 210 are placed in the housing 220, a threaded fastener 100 is passed through the connecting through-holes 212 in the aluminium end plates 211, so that the threaded fastener 100 is screwed into the housing 220 (that is, the aluminium end plates 211 and the housing 220 are the two parts to-be-connected). When the flange plate 20 of the threaded fastener 100 is fixedly pressed the end plates against the housing 220, the battery modules 210 are fixed within the housing 220.

However, during a cold heading process of the existing threaded fastener 100, a circumferential edge of the flange plate 20 of the threaded fastener is formed with a sharp right-angled edge, and the threaded fastener 100 exhibits a greater hardness compared to the aluminium end plates 211. As a result, during a tightening process of the threaded fastener 100, the sharp right-angled edge of the flange plate 20 tends to scratch the aluminium end plates 211 with a relatively lower harness, leading to burrs and debris formation and causing the cleanliness inside the battery pack 200 not to meet the required standards (note: the battery pack 200 belongs to an electrical product, and the cleanliness inside the product is strictly controlled, especially the control of metal particles).

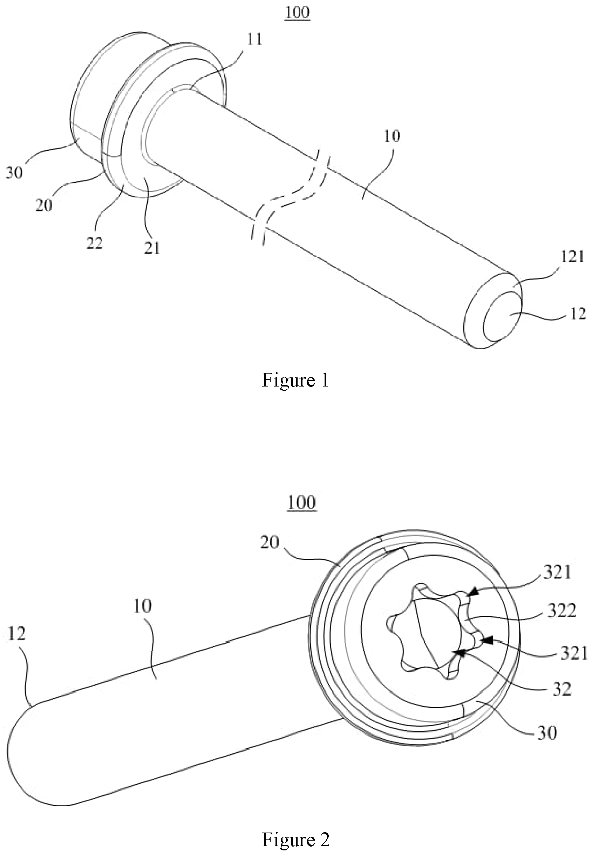

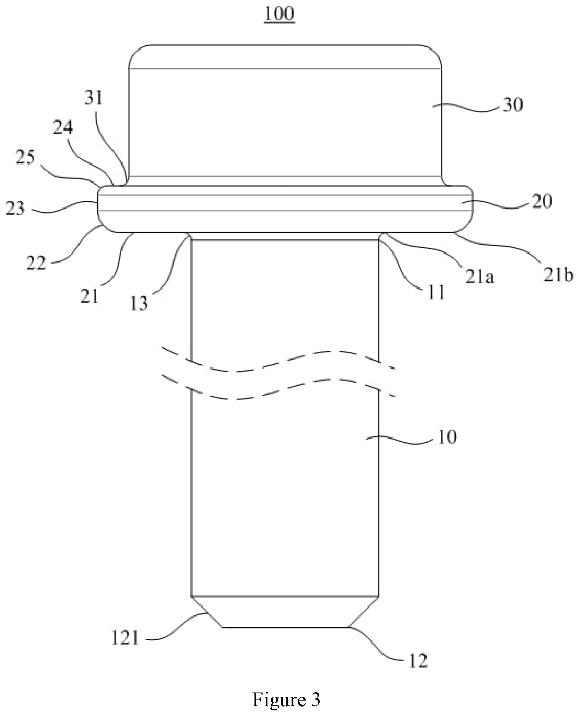

Therefore, in order to solve the above technical problem, as shown in Figure 1 and Figure 3, a threaded fastener 100 is provided in the embodiment of the application. The threaded fastener 100 includes a threaded rod 10 and a flange plate 20. The threaded rod 10 is configured to be screwed into the parts to-be-connected. The flange plate 20 includes a pressing surface 21. One end of the threaded rod 10 is connected to the pressing surface 21. The pressing surface 21 is configured to be pressed against the parts to-be-connected. A circumferential edge of the pressing surface 21 is formed with an anti-scratch arcuate surface 22. The anti-scratch arcuate surface 22 is tangential to the pressing surface 21.

Specifically, the threaded fastener 100 according to this embodiment can be a bolt or a screw. For example, in the structural scheme shown in Figure 1, the threaded fastener 100 is specifically a flange bolt, and the threaded fastener 100 includes a threaded rod 10 and a flange plate 20 connected to each other.

The threaded rod 10 is a cylindrical rod and the threaded rod 10 includes a connecting end 11 and a free end 12 opposite to each other along a peripheral direction. The connecting end 11 is fixedly connected to the flange plate 20, and the free end 12 is spaced apart from the flange plate 20. A guiding slope 121 is formed on the free end 12. The guiding slope 121 can play a guiding role when the threaded rod 10 is passed through the through-holes in the parts to-be-connected, so that the threaded rod 10 can be passed through the through-holes in the parts to-be-connected faster and more smoothly. An outer circumference of the threaded rod 10 is formed with external threads to enable the threaded rod 10 to be screwed into the parts to-be-connected.

It should be noted that there are usually two parts to-be-connected. The threaded rod 10 can be screwed into both parts to-be-connected, or only into one part to-be-connected that is further away from the flange plate 20. The specific situation depends on whether both parts to-be-connected have threaded holes 221.

For example, as shown in Figure 5, in case that it is necessary to fix the aluminium end plates 211 of the battery module 210 to the housing 220, the aluminium end plates 211 and the housing 220 are parts needed to be connected. Therefore, both the aluminium end plates 211 and the housing 220 are defined as "parts to-be-connected" in this embodiment. In the figures, connecting through-holes 212 are formed through the aluminium end plates 211, and an inner wall of the connecting through-holes 212 are not formed with threads. The housing 220 is formed with threaded holes 221 corresponding to the connecting through-holes 212, and the threaded holes 221 are formed with internal threads. Therefore, the threaded rod 10 is only screwed into the housing 220, but not into the aluminium end plates 211.

It is obvious that the threaded fastener 100 according to the present application is not limited to be used in the battery pack 200. When the threaded fastener 100 according to the present application is applied to other fields, the threaded rod 10 of the threaded fastener 100 can be screwed into both of the two parts to-be-connected.

In addition, an outer diameter, a length, a shape of the thread, rotation direction of the thread, a pitch, a lead, etc. of the threaded rod 10 can be flexibly designed according to actual needs, which is not limited thereto.

As shown in Figure 1, the flange plate 20 is in a shape of a circular plate and is formed with a pressing surface 21 for pressing against the parts to-be-connected. The connecting end 11 of the threaded rod 10 is fixedly connected to the pressing surface 21. Specifically, the threaded rod 10 is integrally formed with the flange plate 20 and is usually coaxially arranged with the flange plate 20. The pressing surface 21 is a flat surface, and the pressing surface 21 is configured to press against the parts to-be-connected, so that the flange plate 20 can press against the parts to-be-connected.

It should be noted that, as mentioned earlier, there are usually two parts to-be-connected, and one of the parts to-be-connected closer to the flange plate 20 is pressed against the pressing surface 21. For example, as shown in Figure 5, in the battery pack 200, the aluminium end plates 211 and the housing 220 are the two parts to-be-connected. The threaded rod 10 is passed through the aluminium end plates 211 and is screwed into the housing 220. The pressing surface 21 of the flange plate 20 is pressed against the aluminium end plates 211.

As shown in Figure 1 and Figure 3, an anti-scratch arcuate surface 22 is formed along the circumferential edge of the pressing surface 21. Specifically, one side of the anti-scratch arcuate surface 22 is connected to the pressing surface 21, and the other side of the anti-scratch arcuate surface is bent and extended away from the threaded rod 10, and the anti-scratch arcuate surface 22 is tangential to the pressing surface 21. As a result, when the threaded fastener 100 is tightened and the pressing surface 21 is rotated against the aluminium end plates 211, because the anti-scratch arcuate surface 22 is a curved surface and is tangential to the circumferential edge of the pressing surface 21, the circumferential edge of the flange plate would not scratch the aluminium end plates 211 during the rotation of the flange plate 20 in relative to the aluminium end plates 211. As a result, aluminium burrs and debris formation is avoided, thereby effectively addressing the technical problem of burrs and debris formation of the aluminium end plates 211 during the fastening of the bolt of the battery module 210 into the aluminium end plates 211.

It should be noted that in order to form an anti-scratch arcuate surface 22 along the circumferential edge of the pressing surface 21, the threaded fastener 100 can be produced by a mould. An arcuate forming surface is formed on the mould at a position corresponding to the circumferential edge of the pressing surface 21 to make the anti-scratch arcuate surface 22. It can be understood that the anti-scratch arcuate surface 22 can be made at the circumferential edge of the pressing surface 21 without increasing production costs.

Optionally, in some possible embodiments, please refer to Figure 3 and Figure 4, a radius of the anti-scratch arcuate surface 22 is R. R is greater than or equal to 0.7 millimetres and less than or equal to 0.9 millimetres.

Specifically, the value of the radius R of the anti-scratch arcuate surface 22 may be selected from a range of discrete values, such as 0.7 millimetres, 0.71 millimetres, 0.72 millimetres, 0.73 millimetres, 0.74 millimetres, 0.75 millimetres, 0.76 millimetres, 0.77 millimetres, 0.78 millimetres, 0.79 millimetres, 0.8 millimetres, 0.81 millimetres, 0.82 millimetres, 0.83 millimetres, 0.84 millimetres, 0.85 millimetres, 0.86 millimetres, 0.87 millimetres, 0.88 millimetres, 0.89 millimetres, 0.9 millimetres, and similar values within the defined range.

It can be understood that in case that the radius of the anti-scratch arcuate surface 22 is small, the corresponding arcuate forming surface on the mould should also be small, which increases the difficulty of mould fabrication and may compromise the dimensional accuracy of the arcuate forming surface, making it difficult to precisely control the size of the anti-scratch arcuate surface 22. In case that the radius of the anti-scratch arcuate surface 22 is large, an area of the pressing surface 21 should be reduced, which decreases a contact area between the flange plate 20 and the aluminium end plates 211. As a result, the aluminium end plates 211 may be crushed (i.e., deformed) by the flange plate 20.

Therefore, in this embodiment, the radius of the anti-scratch arcuate surface 22 is controlled within the range of 0.7 millimetres to 0.9 millimetres. This range helps avoid increased difficulty in mould fabrication and prevents compromising the dimensional accuracy of the arcuate forming surface, ensuring that the size of the anti-scratch arcuate surface 22 is more controllable, and also avoiding that the aluminium end plates 211 is crushed by the flange plate 20 due to a small area of the pressing surface 21 and a small contact area between the flange plate 20 and the aluminium end plates 211.

Optionally, in some possible embodiments, referring to Figure 3, the threaded rod 10 includes a connecting end 11 and a free end 12 that are opposite along an axial direction of the threaded rod. The connecting end 11 is connected to the pressing surface 21, and the free end 12 is spaced apart from the pressing surface 21. The pressing surface 21 is also inclined relative to the threaded rod 10. The pressing surface 21 includes a first connection position 21a in connection with the threaded rod 10 and a second connection position 21b in connection with the anti-scratch arcuate surface 22. That is, the first connection position 21a is extended in the peripheral direction of the threaded rod 10, and the second connection position 21b is extended in the peripheral direction of the anti-scratch arcuate surface 22. In the axial direction of the threaded rod 10, a distance between the first connection position 21a and the free end 12 is smaller than a distance between the second connection position 21b and the free end 12.

Specifically, in this embodiment, taking an orientation relationship of "the flange plate 20 on top and the threaded rod 10 on bottom" in Figure 3 as an example, a surface of the flange plate is extended outward from the threaded rod 10 and gradually tilted upwards. As a result, the distance between the first connection position 21a and the free end 12 is smaller than the distance between the second connection position 21b and the free end 12. That is to say, in the axial direction of the threaded rod 10, the closer a position of the surface of the flange plate is to the first connection position 21a, the lower the height of the position is; and the farther a position of the surface of the flange plate is from the first connection position 21a, the higher the height of the position is. That is to say, as the threaded fastener 100 is screwed, a portion of the pressing surface 21 that is closer to the first connection position 21a comes into contact with the aluminium end plates 211 before a portion that is farther from the first connection position 21a.

Therefore, it can be understood that when most of the pressing surface 21 is in contact with the aluminium end plates 211, a certain gap remains between the circumferential edge of the pressing surface 21 (i.e., the area around the second connection position 21b) and the aluminium end plates 211. The gap helps prevent the circumferential edge of the pressing surface from scratching the aluminium end plates 211, thereby avoiding burrs and debris formation and ensuring the cleanliness inside the battery pack 200.

However, it can also be understood that if an upward inclination angle of the pressing surface 21 is small, it does not effectively prevent the circumferential edge of the pressing surface 21 from scratching the aluminium end plates 211. On the other hand, if the upward inclination angle of the pressing surface 21 is large, the contact area between the pressing surface 21 and the aluminium end plates 211 becomes small, which may lead to deformation or crushing of the aluminium end plates 211. Therefore, in this embodiment, please refer to Figure 3 and Figure 4, an angle between the pressing surface 21 and the threaded rod 10 is denoted as angle A. Specifically, the angle A refers to the angle between any straight line on the pressing surface 21 and the axis of the threaded rod 10, and the angle A is set to be greater than or equal to 90° and less than or equal to 91°.

Specifically, the value of the angle A may be selected from a range of discrete values, such as 90°, 90.1°, 90.2°, 90.3°, 90.4°, 90.5°, 90.6°, 90.7°, 90.8°, 90.9°, 91°, and similar values within the defined range.

It can be understood that in this embodiment, the angle A between the pressing surface 21 and the threaded rod 10 is controlled within the range of 90° to 91°, which not only ensures an effective anti-scratch effect but also prevents the contact area between the pressing surface 21 and the aluminium end plates 211 from becoming too small, thereby avoiding potential deformation or crushing of the aluminium end plates 211.

It should be noted that during production, an angle of 90.5° can be used as a reference value for angle A. This ensures that even with minor manufacturing deviations, the resulting angle A between the pressing surface 21 and the threaded rod 10 remains within the desired range of 90° to 91°.

Optionally, in some possible embodiments, please refer to Figure 3 and Figure 4, the flange plate 20 also includes a vertically extending outer peripheral surface 23. The anti-scratch arcuate surface 22 is located between the pressing surface 21 and the outer peripheral surface 23. An outer diameter of the anti-scratch arcuate surface 22 is denoted as D1, and an outer diameter of the outer peripheral surface 23 is denoted as D2. The outer diameter of the outer peripheral surface 23 represents a maximum outer diameter of the flange plate 20. In this embodiment, the ratio of D1 to D2 is defined as K, where K is greater than or equal to 0.85 and less than or equal to 0.885.

Specifically, the value of K may be selected from a range of discrete values, such as 0.85, 0.852, 0.855, 0.857, 0.858, 0.86, 0.862, 0.864, 0.865, 0.867, 0.869, 0.87, 0.871, 0.873, 0.875, 0.877, 0.879, 0.88, 0.881, 0.882, 0.883, 0.884, 0.885, and similar values within the defined range.

It can be understood that if a ratio of the outer diameter of the anti-scratch arcuate surface 22 to the outer diameter of the outer peripheral surface 23 is less than 0.85, it indicates that the area of the pressing surface 21 is small, which results in a reduced contact area between the flange plate 20 and the aluminium end plates 211, making it more likely to crush the aluminium end plates 211. If the ratio of the outer diameter of the anti-scratch arcuate surface 22 to the outer diameter of the outer peripheral surface 23 is greater than 0.885, it indicates that the difference in outer diameter between the pressing surface 21 and the outer peripheral surface 23 is small, resulting in a smaller anti-scratch arcuate surface 22, which is difficult to control during production and negatively impacts the anti-scratch effect.

Therefore, in this embodiment, the ratio of the outer diameter of the anti-scratch arcuate surface 22 to the outer diameter of the outer peripheral surface 23 is controlled to be within the range of 0.85 to 0.885. This ensures a sufficient contact area between the flange plate 20 and the aluminium end plates 211, preventing the aluminium end plates 211 from being crushed, and also avoids the issue of the anti-scratch arcuate surface 22 being small to control during production, thereby ensuring the anti-scratch effect.

Optionally, in some possible embodiment, please refer to Figure 3 and Figure 4, the flange plate 20 also include an upper end surface 24 opposite to the pressing surface 21. The outer peripheral surface 23 is located between the anti-scratch arcuate surface 22 and the upper end surface 24. Specifically, in this embodiment, a distance between the upper end surface 24 and the pressing surface 21 corresponds to a thickness of the flange plate 20. In the axial direction of the threaded rod 10, the distance between the upper end surface 24 and the pressing surface 21 is denoted as T, where T is greater than or equal to 1.3 millimetres and less than or equal to 1.5 millimetres.

Specifically, the value of T may be selected from a range of discrete values, such as 1.3 millimetres, 1.31 millimetres, 1.32 millimetres, 1.33 millimetres, 1.34 millimetres, 1.35 millimetres, 1.36 millimetres, 1.37 millimetres, 1.38 millimetres, 1.39 millimetres, 1.4 millimetres, 1.41 millimetres, 1.42 millimetres, 1.43 millimetres, 1.44 millimetres, 1.45 millimetres, 1.46 millimetres, 1.47 millimetres, 1.48 millimetres, 1.49 millimetres, 1.5 millimetres, and similar values within the defined range.

It can be understood that if the distance between the upper end surface 24 and the pressing surface 21 is less than 1.3 millimetres, it indicates that the thickness of the flange plate 20 is small, resulting in insufficient locking force on the aluminium end plates 211. If the distance between the upper end surface 24 and the pressing surface 21 is greater than 1.5 millimetres, it indicates that the thickness of the flange plate 20 is large, which results in a larger volume and weight of the threaded fastener 100, and the flange plate 20 is prone to interference with a locking tool.

Therefore, in some possible embodiments, the gap between the upper end surface 24 and the pressing surface 21 is controlled with a range of 1.3 millimetres to 1.5 millimetres. This ensures that the flange plate 20 has sufficient thickness to securely lock the aluminium end plates 211, while avoiding the excessive volume and weight of the threaded fastener 100, thereby preventing unnecessary increases in the weight of the battery pack 200.

In some possible embodiments, as shown in Figure 3, a connecting arcuate surface 25 is located between the upper end surface 24 and the outer peripheral surface 23, which helps avoid burrs formation between the upper end surface 24 and the outer peripheral surface 23 during the production of the threaded fastener 100, thereby ensuring the cleanliness inside the battery pack 200.

It should be noted that the radius of the connecting arcuate surface 25 can be flexibly designed according to actual requirements. For example, in some possible embodiments, the radius of the connecting arcuate surface 25 is smaller than the radius of the anti-scratch arcuate surface 22. As mentioned earlier, the radius of the anti-scratch arcuate surface 22 is greater than or equal to 0.7 millimetres and less than or equal to 0.9 millimetres. Therefore, the radius of the connecting arcuate surface 25 may be selected as 0.6 millimetres, 0.5 millimetres, 0.4 millimetres, 0.3 millimetres, 0.2 millimetres, or other suitable values within the defined range.

It can be understood that if the radius of the connecting arcuate surface 25 is greater than or equal to the radius of the anti-scratch arcuate surface 22, in order to avoid the intersection of the connecting arcuate surface 25 and the anti-scratch arcuate surface 22 (which would result in a more complex surface structure that is difficult to manufacture), the size of the outer peripheral surface 23 in the axial direction of the threaded rod 10 needs to be increased, which results in a thicker flange plate 20 and consequently a larger volume and weight of the threaded fastener 100.

Therefore, in this embodiment, the radius of the connecting arcuate surface 25 is made smaller than the radius of the anti-scratch arcuate surface 22, it is possible to avoid the flange plate 20 from becoming thick and to prevent an increase in the volume and weight of the threaded fastener 100 while preventing the generation of burrs.

In some possible embodiments, as shown in Figure 3, a screwing head 30 is disposed to protrude from the upper end surface 24. The screwing head 30 is configured to engage with a screw tool (such as a screwdriver, wrench, etc.). A first transition arcuate surface 31 is located between the screwing head 30 and the upper end surface 24. During the production of the threaded fastener 100, this design helps avoid burrs formation between the screwing head 30 and the upper end surface 24, thereby ensuring the cleanliness inside the battery pack 200.

It should be noted that the specific shape of the screwing head 30 can be flexibly selected according to actual requirements. For example, the screwing head 30 may be shaped as a polygonal prism, such as a square prism (i.e. a square head) or a hexagonal prism (i.e. a hexagonal head). Alternatively, it may be cylindrical in shape, with a non-circular clamping groove 32.

For example, in some possible embodiments, as shown in Figure 2, a clamping groove 32 is recessed at an end, away from the upper end surface 24, of the screwing head 30. In this embodiment, multiple clamping sub-grooves 321 are recessed at intervals on an inner peripheral wall of the clamping groove 32. The clamping sub-grooves 321 are arc-shaped, and a second transition arcuate surface 322 is located between adjacent two ones of clamping sub-grooves 321. In other words, in this embodiment, the screwing head 30 is cylindrical in shape, and the clamping groove 32 of the screwing head 30 forms a plum blossom pattern with a curved inner surface. This design avoids sharp or right-angled structures on the screwing head 30, thereby preventing burr formation and ensure the cleanliness inside the battery pack 200.

In some possible embodiments, as shown in Figure 3, a third transition arcuate surface 13 is located between the threaded rod 10 and the pressing surface 21. Similarly, the first transition arcuate surface 31 can avoid burrs formation between the threaded rod 10 and the pressing surface 21, ensuring the cleanliness inside the battery pack 200.

According to a second aspect, as shown in Figure 5, the embodiments of the present application provide a battery pack 200. The battery pack 200 includes a battery module 210, a housing 220, and any of the threaded fasteners 100 described above. The battery module 210 is installed inside the housing 220, and aluminium end plates 211 are provided at both ends of the battery module 210. Each aluminium end plate 211 include a through-hole 212, and the housing 220 includes threaded holes 221. The threaded rod 10 of the threaded fastener 100 is passed through the connecting through-hole 212 and is screwed into the threaded hole 221. The flange plate 20 is pressed against the aluminium end plates 211. Since the battery pack 200 of this application adopts all the technical solutions of the above embodiments, it achieves at least all the corresponding beneficial effects brought by the technical solutions of the above embodiments, which will not be repeated here.

## Claims

1. A threaded fastener (100) comprising:
a threaded rod (10) configured to screw with a part to-be-connected; and,
a flange plate (20), the flange plate (20) having a pressing surface, one end of the threaded rod (10) being connected to the pressing surface (21), the pressing surface (21) being configured for pressing against the part to-be-connected, and a circumferential edge of the pressing surface (21) being formed with an anti-scratch arcuate surface (22), the anti-scratch arcuate surface (22) being tangential to the pressing surface (21).

2. The threaded fastener (100) according to claim 1, wherein a radius of the anti-scratch arcuate surface (22) is greater than or equal to 0.7 millimetres and less than or equal to 0.9 millimetres.

3. The threaded fastener (100) according to claim 1, wherein the threaded rod (10) comprises a connecting end (11) and a free end (12) opposite to each other along an axial direction of the threaded rod (10), the connecting end (11) is connected to the pressing surface (21), and the free end (12) is spaced apart from the pressing surface (21);
the pressing surface (21) is further inclined relative to the threaded rod (10), and the pressing surface (21) comprises a first connection position (21a) connected to the threaded rod (10) and a second connection position (21b) connected to the anti-scratch arcuate surface (22); in the axial direction of the threaded rod (10), a distance between the first connection position (21a) and the free end (12) is less than a distance between the second connection position (21b) and the free end (12).

4. The threaded fastener (100) according to claim 3, wherein an angle between the pressing surface and the threaded rod (10) is greater than or equal to 90° and less than or equal to 91°.

5. The threaded fastener (100) according to any one of claims 1 to 4, wherein the flange plate further comprises an outer peripheral surface, and the anti-scratch arcuate surface (22) is located between the pressing surface (21) and the outer peripheral surface, and a ratio of an outer diameter of the anti-scratch arcuate surface (22) to an outer diameter of the outer peripheral surface is greater than or equal to 0.85 and less than or equal to 0.885.

6. The threaded fastener (100) according to claim 5, wherein the flange plate further comprises an upper end surface opposite to the pressing surface (21), and the outer peripheral surface is located between the anti-scratch arcuate surface (22) and the upper end surface; wherein, in the axial direction of the threaded rod (10), a distance between the upper end surface and the pressing surface is greater than or equal to 1.3 millimetres and less than or equal to 1.5 millimetres.

7. The threaded fastener (100) according to claim 6, wherein a connecting arcuate surface (25) is located between the upper end surface and the outer peripheral surface.

8. The threaded fastener (100) according to claim 7, wherein a radius of the connecting arcuate surface is less than a radius of the anti-scratch arcuate surface (22).

9. The threaded fastener (100) according to claim 6, wherein a screwing head (30) is disposed to protrude from the upper end surface, and the screwing head (30) is configured to engage with a screw tool, and a first transition arcuate surface (31) is located between the screwing head (30) and the upper end surface.

10. The threaded fastener (100) according to claim 9, wherein a clamping groove (32) is recessed at an end, away from the upper end surface (24), of the screwing head (30), and a plurality of clamping sub-grooves (321) are recessed at intervals on an inner peripheral wall of the clamping groove (32); the clamping sub-grooves (321) are arc-shaped, and a second transition arcuate surface (322) is located between adjacent two ones of the clamping sub-grooves (321).

11. The threaded fastener (100) according to any one of claims 1 to 4, wherein a third transition arcuate surface (13) further is located between the threaded rod and the pressing surface (21).

12. A battery pack comprising the threaded fastener (100) as claimed in any one of claims 1 to 11.
